# EUROPÄISCHE PATENTANMELDUNG

(11) **EP 1 351 265 A1**
(43) Veröffentlichungstag der Anmeldung: **08.10.2003**
(21) Anmeldenummer: 03000387.5
(22) Anmeldetag: 10.01.2003
(51) Int. Cl.: H01G 9/10

(54) **Deckel zum Verschliessen von Elektrolytkondensatoren**

(30) Priorität: 06.04.2002 DE 10215257
(71) Anmelder: New-York Hamburger Gummi-Waaren Compagnie AG, 21079 Hamburg (DE)
(72) Erfinder: Keun, Christian-Andre, 20144 Hamburg (DE)
(74) Vertreter: Hansmann, Dierk, Dipl.-Ing.

(57) **Zusammenfassung**

Bei einem Deckel für Elektrolytkondensatoren aus Kunststoffmaterial ist vorgesehen, daß ein syndiotaktischer semikristalliner aromatischer Thermoplast für das Deckelelement verwendet wird.

## Beschreibung

Die Erfindung bezieht sich auf einen Deckel zum Verschließen von Elektrolytkondensatoren aus Kunststoffmaterial, wobei metallische Anschlußelemente im Deckel integrierbar und der Deckel über eine umlaufende Ringdichtung ein becherförmiges Gehäuse des Elektrolytkondensators druckdicht abschließt.

Für die gattungsgemäßen Deckel werden Verdeckelungsmaterialien aus überwiegend duromene Formmassen auf Phenolbasis eingesetzt, da sie eine ausreichende Beständigkeit gegen übliche Elektrolytflüssigkeiten gegen hoch-aggressive und explosive Elektrolyts, wie Ethylenglycol, γ-Butorolacton und Dimethyacetamid, erfüllen. Ferner besteht das Problem für derartige Deckelmaterialien, eine Kriechstromfestigkeit zur Verbindung von Kurzschlüssen zu erfüllen, die dadurch auch eine Halogenfreiheit erforderlich machen.

Da die herzustellenden Deckelanordnungen ein Massenbauteil sind und damit auch eine Kosten-/Nutzenbetrachtung von großer Bedeutung ist, können entsprechende hochwertige Materialien mit hohen Einstandskosten nicht eingesetzt werden, um die gestellten Forderungen zu erfüllen.

Die Aufgabe der Erfindung ist es, einen wirtschaftlich herstellbaren gattungsgemäßen Deckel als Massenprodukt aus einem Material mit einer ausreichenden Kriechstromfestigkeit zu schaffen, das auch eine druckdichte Abdichtung von hoch-aggressivem Elektrolyt bei einer hohen Betriebstemperatur ermöglicht.

Die Lösung dieser Aufgabe steht erfindungsgemäß darin, daß ein syndiotaktischer semikristalliner aromatischer Thermoplast für das Deckelelement verwendet wird.

Hierdurch ist es möglich, den Anforderungen der vorliegenden Betriebsverhältnisse und der Verarbeitung Rechnung zu tragen sowie einen wirtschaftlichen Werkstoff einzusetzen.

Ferner wird vorgeschlagen, daß eine umlaufende Ringdichtung aus einem Elastomer bzw. aus einer im 2-Komponenten-Spritgußverfahren hergestellten Dichtung angeordnet ist.

## Patentansprüche

1. Deckel zum Verschließen von Elektrolytkondensatoren aus Kunststoffmaterial, wobei metallische Anschlußelemente im Deckel integrierbar und der Deckel über eine umlaufende Ringdichtung ein becherförmiges Gehäuse des Elektrolytkondensators druckdicht abschließt, **dadurch gekennzeichnet, daß** ein syndiotaktischer semikristalliner aromatischer Thermoplast für das Deckelelement verwendet wird.

2. Deckel nach Anspruch 1, **dadurch gekennzeichnet, daß** eine umlaufende Ringdichtung aus einem Elastomer bzw. aus einer im 2-Komponenten-Spritgußverfahren hergestellten Dichtung angeordnet ist.
